# EUROPÄISCHE PATENTSCHRIFT

(11) **EP 3 377 271 B1**
(45) Veröffentlichungstag und Bekanntmachung des Hinweises auf die Patenterteilung: **06.01.2021**
(21) Anmeldenummer: 16800906.6
(22) Anmeldetag: 15.11.2016
(51) Int. Cl.: B25F 5/00

(54) **STEUERUNGSVERFAHREN FÜR EINE WERKZEUGMASCHINE**
CONTROL METHOD FOR A HAND-HELD MACHINE TOOL
PROCÉDÉ DE COMMANDE DE MACHINE-OUTIL

(30) Priorität: 17.11.2015 EP 15194975
(43) Veröffentlichungstag der Anmeldung: 26.09.2018
(73) Patentinhaber: Hilti Aktiengesellschaft, 9494 Schaan (LI)
(72) Erfinder: SCHAER, Roland, 9472 Grabs (CH); KINKELDEI, Thomas, 9470 Buchs (CH); HRICKO, Peter, 9470 Buchs (CH); GUT, Manuel, 6800 Feldkirch (AT); WIERER, Michael, 6700 Bludenz (AT)
(74) Vertreter: Hilti Aktiengesellschaft Corporate Intellectual Property
(86) Internationale Anmeldenummer: PCT/EP2016/077658
(87) Internationale Veröffentlichungsnummer: WO 2017/085039

(56) Entgegenhaltungen:
- EP-A1- 2 447 010
- EP-A2- 2 338 646
- WO-A1-2011/122362
- WO-A1-2011/122695

## Beschreibung

Die vorliegende Erfindung betrifft ein Steuerungsverfahren einer Werkzeugmaschine für rotierende Werkzeuge gemäß dem Oberbegriff des Anspruchs 1. Ein solches Steuerungsverfahren ist aus EP 2338646 A2 bekannt.

EP 2338646 A2 beschreibt einen Bohrhammer mit einer Schutzeinrichtung. Die Schutzeinrichtung erkennt, wenn sich der Bohrhammer unkontrolliert um seine Arbeitsachse zu schwenken beginnt. Ursache für das Schwenken kann ein Blockieren des Bohrers in einem Bohrloch sein. Der Anwender spürt in Folge das rückwirkende Drehmoment des Motors und kann den Bohrhammer nicht mehr halten. Die Schutzeinrichtung unterbricht die standardmäßige kontinuierliche Drehbewegung in die Vorwärtsrichtung, um den Anwender vor dem rückwirkenden Drehmoment zu schützen. Der Bohrhammer wechselt stattdessen periodisch die Drehrichtung, solange die unkontrollierte Bewegung des Bohrhammers andauert und der Anwender den Bohrhammer in Betrieb hält. Die oszillatorische Bewegung des Bohrers kann ein Lösen des Blockierens begünstigen. Die Schutzeinrichtung gibt die standardmäßige kontinuierliche Drehbewegung wieder frei, wenn sich die Blockade des Bohrers löst.

Die Sicherheitsfunktion erweckt bei dem Anwender den Eindruck, der Bohrhammer habe sich abgeschaltet. Der Anwender löst daraufhin den Betriebsschalter und schaltet den Bohrhammer ab. Anschließend hat der Anwender erhebliche Schwierigkeiten den Bohrhammer mit dem blockierten Bohrer zu startet und aus dem Bohrloch zu lösen.

### OFFENBARUNG DER ERFINDUNG

Ein erfindungsgemäßes Steuerungsverfahren einer Werkzeugmaschine für rotierende Werkzeuge umfasst die Merkmale des Anspruchs 1 und sieht folgende Schritte vor. Ein Werkzeughalter wird mittels eines Drehantriebs in einer Vorwärtsrichtung um eine Arbeitsachse kontinuierlich gedreht, wenn ein Betriebstaster betätigt ist. Das kontinuierliche Drehen in der Vorwärtsrichtung wird durch ein Schutzverfahren unterbrochen, wenn eine Schutzeinrichtung ein Blockieren des Werkzeughalters erfasst. Während des Schutzverfahrens werden ein oder mehreren Zyklen ausgeführt, in welchen der Drehantrieb aufeinanderfolgend entsprechend einer ungehemmten Drehbewegung in eine Rückwärtsrichtung und entsprechend einer ungehemmten Drehbewegung in die Vorwärtsrichtung angesteuert wird. Der Drehantrieb wird für die Drehbewegung in die Rückwärtsrichtung mit einer ersten Energiemenge und für die Drehbewegung in die Vorwärtsrichtung mit einer zweiten Energiemenge gespeist. Die erste Energiemenge ist geringer als die zweite Energiemenge.

Die versuchte Auslenkung in die Rückwärtsrichtung ist geringer als die versuchte Auslenkung in die Vorwärtsrichtung. Der Anwender muss im zeitlichen Mittel eher aus der ihm gewohnten Drehrichtung ein rückwirkendes Drehmoment der Werkzeugmaschine abstützen. Die Werkzeugmaschine ist für den Anwender erkennbar tätig.

Die erste Energiemenge kann durch einen ersten Strompuls I1 mit einer ersten Amplitude und eine ersten Dauer dt2 bereitgestellt werden. Analog kann die zweite Energiemenge mit einem zweiten Strompuls mit einer zweiten Amplitude und einer zweiten Dauer dt2 bereitgestellt werden. Das erste Produkt aus der ersten Dauer dt2 und der ersten Amplitude ist geringer als das zweite Produkt aus der zweiten Dauer dt2 und der zweiten Amplitude. Der Strom I1 ist eine geeignete Form, die eingespeiste Energiemenge zu kontrollieren.

Ein Unterschied der ersten Energiemenge zu der zweiten Energiemenge kann in aufeinanderfolgenden Zyklen erhöht werden. Insbesondere kann der Unterschied erhöht werden, wenn der Werkzeughalter sich zu drehen beginnt.

Die Schutzeinrichtung kann während der Schutzfunktion eine Drehzahl überwachen und ansprechend eines Überschreiten eines Schwellwerts durch die Drehzahl die Schutzfunktion deaktiviert und das kontinuierliche Drehen in die Vorwärtsrichtung fortsetzten. Wenn die Hemmung des Werkzeughalters nachlässt, beginnt sich der Werkzeughalter im Mittel in die Vorwärtsrichtung zu drehen. Die Drehzahl ist ein Maß für die nachlassende Hemmung. Der Schwellwert ist einer Drehzahl bei einer unkritischen Hemmung entsprechend gewählt.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer
- Fig. 2: ein Ansteuerungsprofil für einen oszillatorischen Betrieb
- Fig. 3: ein Ansteuerungsprofil für einen oszillatorischen Betrieb

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

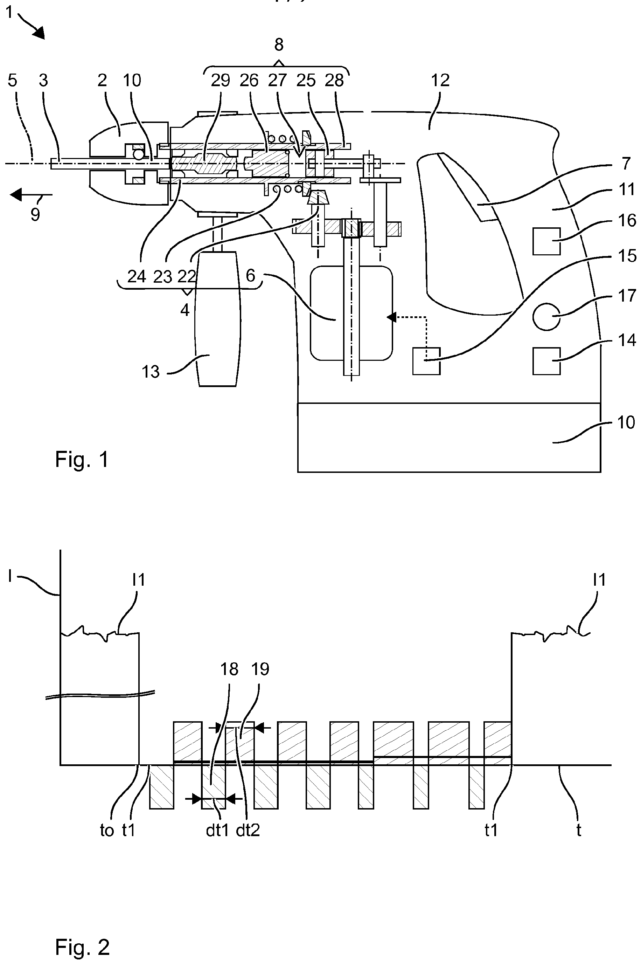

Fig. 1 zeigt als Beispiel einer handgeführten Werkzeugmaschine schematisch einen Bohrhammer **1.** Der Bohrhammer **1** hat einen Werkzeughalter **2,** in welchen ein Bohrer **3** oder anderes Werkzeug eingesetzt und verriegelt werden kann. Der beispielhafte Bohrhammer **1** hat einen Drehantrieb **4,** welcher den Werkzeughalter **2** um dessen Arbeitsachse **5** drehend antreibt. Der Drehantrieb **4** basiert auf einem Elektromotor **6,** den der Anwender über einen Betriebstaster **7** ein- und ausschalten kann. Ein zusätzliches Schlagwerk **8** kann periodisch in einer Schlagrichtung **9,** längs der Arbeitsachse **5** auf den Bohrer **3** schlagen. Das Schlagwerk **8** ist vorzugsweise von dem gleichen Elektromotor **6** angetrieben. Eine Stromversorgung kann über eine Batterie **10** oder eine Netzleitung erfolgen.

Der Bohrhammer **1** hat einen Handgriff **11,** der typischerweise an einem dem Werkzeughalter **2** abgewandten Ende eines Maschinengehäuses **12** des Bohrhammers **1** befestigt ist. Ein zusätzlicher Handgriff **13** kann beispielsweise nahe des Werkzeughalters **2** befestigt werden. Der Anwender kann den Bohrhammer **1** mit dem Handgriff während des Bohrens führen und halten. Ansprechend auf das Betätigen des Betriebstasters **7** dreht sich der Drehantrieb **4** durchgehend in einer Vorwärtsrichtung, typischerweise Rechtslauf. Die rechtsläufige Drehrichtung hat sich als Standard zum Bohren und zum Setzen von Schrauben etabliert. Die Drehzahl kann auf einen Sollwert geregelt sein. Während des Bohrens wirkt auf den Anwender typischerweise ein geringes rückwirkendes Drehmoment ein, welches aus dem Widerstand von Gestein gegenüber dem drehenden Bohrer **3** resultiert. Der Anwender kann die notwendige Haltekraft mühelos oder mit geringer Anstrengung aufbringen.

Der Bohrer **3** kann in dem Bohrloch blockieren, wodurch in Folge des sich weiterhin drehenden Drehantriebs **4** ein hohes Drehmoment auf den Werkzeughalter **2** ausgeübt wird. Das rückwirkende Drehmoment kann dabei ruckartig ansteigen und den Anwender und den Bohrhammer **1** schädigen. Um einer Verletzung des Anwenders und einer Beschädigung des Bohrhammers **1** vorzubeugen unterbricht eine Schutzeinrichtung **14** automatisch den standardmäßigen Betrieb des Bohrhammers **1.**

Die Schutzeinrichtung **14** initiiert bei dem Störfall einen oszillierenden Betrieb des Drehantriebs **4,** während welchem der Drehantrieb **4** zyklisch zwischen einem Drehen in Rückwärtsrichtung, typischerweise Linkslauf, und einem Drehen in die Vorwärtsrichtung wechselt. Der Drehantrieb **4** dreht etwas stärker in die Vorwärtsrichtung als in die Rückwärtsrichtung. Es ergibt sich somit eine resultierende mittlere Drehbewegung in die Vorwärtsrichtung. Falls sich der Bohrer **3** während des oszillierenden Betriebs löst, beendet die Schutzeinrichtung **14** den oszillierenden Betrieb und der Bohrhammer **1** nimmt wieder den standardmäßigen Betrieb mit einer kontinuierlichen Drehbewegung in die Vorwärtsrichtung auf.

Der Anwender kann den Drehantrieb **4** mit dem Betriebstaster **7** ein- und ausschalten. Der beispielhafte Betriebstaster **7** hat eine deaktivierende Schaltstellung und eine oder mehrere aktivierende Schaltstellung. Vorzugsweise ist der Betriebstaster **7** monostabil in der deaktivierenden Schaltstellung. Der Anwender muss den Betriebstaster **7** gedrückt halten, ansonsten wird der Drehantrieb **4** abgeschaltet. Der Anwender kann beispielsweise durch Wahl seiner Betätigungskraft eine der aktivierenden Schaltstellungen auswählen. Die verschiedenen Schaltstellungen können mit unterschiedlichen Drehzahlen des Drehantriebs **4** assoziiert sein.

Eine Motorsteuerung **15** wird bei Betätigen des Betriebstasters **7** geweckt. Die Motorsteuerung **15** kontrolliert die Drehrichtung des Elektromotors **6.** Die Motorsteuerung **15** speist entsprechend der Vorwärtsrichtung einen Strom phasenrichtig in die Wicklungen des Elektromotors **6** ein. Die Vorwärtsrichtung ist bei einem Bohrhammer **1** unveränderlich als in rechtslaufend vorgegeben. Bei einem Elektroschrauber ist die Vorwärtsrichtung für den Betrieb typischerweise durch einen Wahlschalter **16** einstellbar.

Die Motorsteuerung **15** kontrolliert die Drehzahl des Elektromotors **6.** Die Motorsteuerung **15** steuert die Leistungsaufnahme des Elektromotors **6** auf einen Sollwert, wodurch sich eine durch die Last vorgegebene Drehzahl einstellt. Die Motorsteuerung **15** gibt beispielsweise einen mittleren Strom mittels einer Pulsweitenmodulation vor. Die Motorsteuerung **15** kann die Leistungsaufnahme derart anpassen, dass sich eine konstante Drehzahl einstellt. Die Begrenzung der Leistungsaufnahme oder die Drehzahl kann beispielsweise durch den Anwender und die Stärke der Betätigung des Betriebstasters **7** vorgegeben werden.

Der Elektromotor **6** kann ein Universalmotor, ein mechanisch kommutierender Elektromotor **6** oder ein elektrisch kommutierender Elektromotor **6** sein. Die Motorsteuerung **15** entkoppelt den Elektromotor **6** von der Stromversorgung, wenn der Betriebstaster **7** in der deaktivierenden Stellung ist.

Die beispielhafte Schutzeinrichtung **14** beinhaltet einen Bewegungssensor **17.** Der Bewegungssensor **17** ist beispielsweise an oder nahe des Handgriffs **13** angeordnet. Der Bewegungssensor **17** erfasst eine Drehbewegung des Handgriffs **13** um die Arbeitsachse **5.** Ein beispielhafter Bewegungssensor **17** ist ein Gyrosensor, welcher unmittelbar eine Winkelgeschwindigkeit basierend auf einer durch die Drehbewegung ausgeübte Corioliskraft ermittelt. Der Gryrosensor kann beispielsweise ein schwingendes Plättchen enthalten, dessen Schwingungsfrequenz durch die Corioliskraft verändert wird. Ein alternativer Bewegungssensor **17** erfasst eine Beschleunigung an zwei versetzten Orten in dem Bohrhammer **1** und ermittelt aus der Differenz die Drehbewegung des Bohrhammers **1.**

Die Schutzeinrichtung **14** wertet die Drehbewegung aus, ob eine unkontrollierte Drehbewegung des Bohrhammers **1** um die Arbeitsachse **5** oder ein durch den Anwender verursachtes Verschwenken des Bohrhammers **1** um die Arbeitsachse **5** vorliegt, welche auf ein überhöhtes Drehmoment an dem Werkzeughalter **2** hinweisen. Ein Algorithmus wertet dazu beispielsweise eine Winkelgeschwindigkeit um die Arbeitsachse **5** aus. Der Algorithmus kann die unkontrollierte Drehbewegung an einem oder mehreren Kriterien erkennen. Ein beispielhaftes Kriterium ist, wenn die Winkelgeschwindigkeit einen Schwellwert überschreitet, der in typischen Anwendungen nicht überschritten wird. Ein weiteres Kriterium ist, wenn ein vorgegebener Drehwinkel innerhalb einer vorgegebener Zeitspanne überschritten wird, z.B. weil der Bohrhammer **1** sich fortlaufend gegen die Haltekraft des Anwenders verdreht. Die Kriterien können verschiedene Paarungen aus Winkelgeschwindigkeit und Drehwinkel mit geeigneten Schwellwerten und Beobachtungszeiträumen beinhalten.

Die Schutzeinrichtung **14** kann einen Stromsensor beinhalten. Der Stromsensor überwacht die Leistungsaufnahme des Elektromotors **6.** Überschreitet die Leistungsaufnahme, insbesondere der Strom, einen Schwellwert, deutet dies auf einen Störfall mit überhöhtem Drehmoment an dem Werkzeughalter **2** hin.

Sobald die Schutzeinrichtung **14** einen Störfall annimmt, löst die Schutzeinrichtung **14** eine Schutzmaßnahme aus. Die Schutzmaßnahme leitet ein Bremsen des Elektromotors **6** ein. Der Elektromotor **6** wird bis zum Stillstand abgebremst. Die Motorsteuerung **15** ist mit einer entsprechenden Funktion und Beschaltung versehen. Beispielsweise kann die Motorsteuerung **15** die Wicklungen des Elektromotor **6** über einen geringen Lastwiderstand kurzschließen. Die in den kurzgeschlossenen Wicklungen laufenden Wirbelströme verursachen ein zu den Magnetfeldern der Permanentmagnete abstoßendes Magnetfeld, wodurch der Rotor abgebremst wird. Alternativ kann die Motorsteuerung **15** den Elektromotor **6** in einer Weise bestromen, die der Rückwärtsrichtung entspricht, bis der Elektromotor **6** abgebremst ist. Zusätzlich kann eine mechanische Bremse das Stoppen des Drehantriebs **4** unterstützen. Das Stoppen der Drehbewegung erfolgt so rasch wie möglich, um den Anwender zu schützen.

Nachdem die Schutzeinrichtung **14** den Drehantrieb **4** gestoppt hat, startet die Schutzeinrichtung **14** ein Schutzverfahren mit einem oszillatorischen Betrieb. Die Schutzeinrichtung **14** veranlasst, dass die Motorsteuerung **15** zyklisch die Drehrichtung zwischen der Vorwärtsrichtung und der Rückwärtsrichtung wechselt. Die Schutzeinrichtung **14** ignoriert zunächst, ob der Elektromotor **6** eine entsprechende Drehbewegung ausführen kann. Die tatsächliche Drehbewegung kann noch immer durch die Blockade des Bohrers **3** gehemmt sein.

Das Verhalten der Schutzeinrichtung **14** wird beispielhaft für einen mechanisch kommutierenden Elektromotor **6** erläutert (Fig. 2). Der Elektromotor **6** wird über den eingespeisten Strom **I** gesteuert. Die Leistungsaufnahme des Elektromotors **6** wird über den bereitgestellten Strom **I** begrenzt. Die Spannung wird als konstant angenommen. Ein Wechsel des Vorzeichens des Stroms I bewirkt einen Wechsel der Drehrichtung des Elektromotors **6.** Das Steuerungsverfahren lässt sich in üblicher Weise auf die Schaltsequenzen für elektrisch kommutierende Elektromotoren übertragen.

Die Motorsteuerung **15** speist einen Strom **I1** für die Vorwärtsrichtung im normalen Betrieb ein. Die Schutzreinrichtung erkennt zum Zeitpunkt **to** einen Störfall. Die Motorsteuerung **15** beendet das Einspeisen des Stroms **I**. Der Elektromotor **6** wird bis zum Zeitpunkt **t1** in den Stillstand abgebremst. Die Schutzeinrichtung **14** beginnt den oszillatorischen Betrieb. Die Motorsteuerung **15** speist abwechselnd einen ersten Strompuls **18** und einen zweiten Strompuls **19** ein. Der erste Strompuls hat verglichen zu dem Strom **I1** das umgekehrte Vorzeichen. Der erste Strompuls **18** bewirkt entsprechend ein Drehmoment des Elektromotors **6** in die Rückwärtsrichtung. Der Werkzeughalter **2** dreht sich abhängig von der Hemmung um einen ersten Winkel in die Rückwärtsrichtung. Der zweite Strompuls **19** hat das gleiche Vorzeichen wie der Strom **I1** und bewirkt entsprechend ein Drehmoment in der vorgegebenen Drehrichtung. Der Werkzeughalter **2** dreht sich abhängig von der Hemmung um einen zweiten Winkel in die Vorwärtsrichtung. Soweit die Hemmung in beide Drehrichtungen gleich ist, bewegt sich der Werkzeughalter **2** langsam in die Vorwärtsrichtung. Der Zyklus aus dem ersten Strompuls **18** und dem zweiten Strompuls **19** wird mehrfach wiederholt.

Die Schutzeinrichtung **14** hat ein unterschiedliches Ansteuerungsprofil für die Vorwärtsrichtung und für die Rückwärtsrichtung. Die Amplitude der Strompulse **18, 19** ist gleich. Die Motorsteuerung **15** begrenzt die Leistungsaufnahme des Elektromotors **6** sowohl in der Vorwärtsrichtung und der Rückwärtsrichtung auf den gleichen Wert. Eine Dauer **dt1** des ersten Strompulses **18** ist jedoch kürzer als die Dauer **dt2** des zweiten Strompulses 19. Dem Elektromotor **6** wird somit weniger Energie für die Bewegung in die Rückwärtsrichtung bereitgestellt als wie Energie für die Vorwärtsrichtung. Die beispielhafte erste Dauer beträgt 22 ms und die beispielhafte zweite Dauer **dt2** beträgt 28 ms. Im Mittel über den Zyklus ergibt sich ein mittleres Drehmoment in die vorgegebene Drehrichtung. Bei einem blockierten Bohrer **3** spürt der Anwender ein mittleres resultierendes Drehmoment in der üblichen Drehrichtung wie beim Bohren. Die erste Dauer **dt1** liegt im Bereich zwischen 75 % und 95 %, z.B. höchstens 90 %, der zweiten Dauer **dt2.**

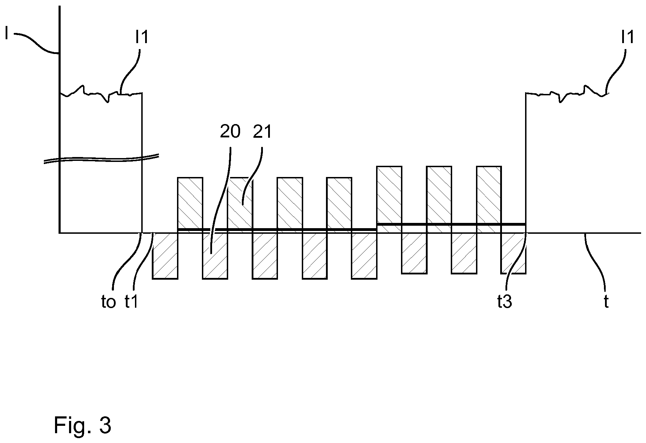

In einem zweiten Beispiel ist die Amplitude eines ersten Strompulses **20** für ein Drehmoment in die Rückwärtsrichtung geringer als die Amplitude eines zweiten Strompulses **21** für ein Drehmoment in die Vorwärtsrichtung (Fig. 3). Der Zyklus aus ersten Strompulsen **20** und zweiten Strompulsen **21** wird mehrfach wiederholt. Das Drehmoment in die Rückwärtsrichtung liegt im Bereich zwischen 75 % und 95 % des Drehmoments in die Vorwärtsrichtung. Die beiden Beispiele können kombiniert werden. Letztlich ist in jedem der Zyklen die für die Rückwärtsrichtung bereitgestellte Energie, also das Produkt aus Dauer und Leistung, geringer als die für die Vorwärtsrichtung bereitgestellte Energie.

Der Bohrer **3** kann sich teilweise oder vollständig aus der Blockade lösen. Aufgrund der leicht stärken Vorwärts- statt Rückwärtsbewegung des oszillatorischen Betriebs beginnt sich der Drehantrieb **4** rechtsläufig zu drehen. Erfasst die Schutzreinrichtung, dass die über einen oder mehrere Zyklen gemittelte Drehzahl einen Schwellwert, z.B. 100 U/min, überschreitet, erhöht die Schutzeinrichtung **14** den Anteil der Bewegung in die Vorwärtsrichtung in dem oszillatorischen Betrieb. In dem vorgenannten ersten Beispiel wird die erste Dauer **dt1** für die Rückwärtsrichtung auf 20 ms verkürzt und die zweite Dauer **dt2** für die Vorwärtsrichtung mit 30 ms erhöht (Fig. 2). In dem vorgenannten zweiten Beispiel wird die Leistungsaufnahme für die Rückwärtsrichtung verringert und für die Vorwärtsrichtung erhöht (Fig. 3). Der Drehantrieb **4** sollte sich nun etwas schneller nach rechts drehen, sofern die Blockade überwunden ist. Die Schutzeinrichtung **14** kann prüfen, ob sich ein entsprechender Zuwachs der Winkelgeschwindigkeit einstellt. Der Anteil für die Vorwärtsrichtung kann in mehreren Schritten erhöht werden.

Die Schutzeinrichtung **14** beendet die Schutzfunktion, wenn eine Drehzahl des Werkzeughalters **2** einen Schwellwert überschreitet. Der beispielhafte Schwellwert liegt bei 2000 U/min. Erreicht der Werkzeughalter **2** während des oszillatorischen Betriebs diese Drehzahl, wird von einer nachlassenden oder vernachlässigbaren Hemmung ausgegangen. Beispielsweise erreicht die Drehzahl im Zeitpunkt **t3** den Schwellwert. Die Leistungsaufnahme des Elektromotors **6** richtet sich wieder nach den Vorgaben durch den Anwender oder die Standardeinstellung des Bohrhammers **1,** wie vor dem Aktivieren der Schutzfunktion.

Die Schutzeinrichtung **14** überwacht die Drehbewegung des Elektromotors **6** oder einer anderen Komponente des Drehantriebs **4.** Bei einer vollständigen Blockade ist die Drehzahl in der vorgegebenen Drehrichtung gleich Null. Falls die Drehzahl für eine vorgegebene Dauer, z.B. 5 Sekunden, unterhalb eines geringen Schwellwerts, z.B. 10 Umdrehungen pro Minute (U/min) liegt, deaktiviert die Schutzeinrichtung **14** den Bohrhammer **1.** Die Motorsteuerung **15** unterbricht die Stromversorgung für den Elektromotor **6.**

Die vorgehende Beschreibung geht von einem Rechtslauf als einer standardmäßigen Vorwärtsrichtung und einem Linkslauf als Rückwärtsrichtung aus. Die Handwerkzeugmaschine kann gleichermaßen einen Linkslauf als standardmäßige Vorwärtsrichtung oder wie z.B. bei Elektroschraubern üblich, eine einstellbare Vorwärtsrichtung aufweisen, wofür die Drehrichtungen in der obigen Beschreibung entsprechend auszutauschen sind.

Der Drehantrieb **4** beinhaltet den Elektromotor **6.** Der Elektromotor **6** ist mit dem Werkzeughalter **2** über einen Antriebsstrang gekoppelt. Der Antriebsstrang hat beispielsweise ein untersetzendes Getriebe **22.** Ferner kann eine Rutschkupplung **23** vorgesehen sein. Eine Welle **24,** beispielsweise eine hohle Welle, koppelt den Drehantrieb **4** an den Werkzeughalter **2.**

Das Schlagwerk **8** ist beispielsweise ein pneumatisches Schlagwerk. Ein Erregerkolben **25** wird durch den Elektromotor **6** in eine periodische Vor- und Zurückbewegung längs der Arbeitsachse **5** gezwungen. Ein auf der Arbeitsachse **5** laufender Schläger **26** ist über eine Luftfeder an den Erregerkolben **25** angekoppelt. Die Luftfeder ist durch eine von dem Erregerkolben **25** und dem Schläger **26** abgeschlossene pneumatische Kammer **27** gebildet. Der Erregerkolben **25** und der Schläger **26** können in einem Führungsrohr **28** geführt sein, welches zugleich die pneumatische Kammer **27** in radialer Richtung abschließt. Ein Döpper **29** kann in Schlagrichtung **9** von dem Schläger **26** angeordnet sein. Der Schläger **26** schlägt auf den Döpper **29,** welcher den Schlag auf den in dem Werkzeughalter **2** liegenden Bohrer **3** weiterleitet.

## Patentansprüche

1. Steuerungsverfahren einer Werkzeugmaschine (1) für rotierende Werkzeuge mit den Schritten:
kontinuierliches Drehen eines Werkzeughalters (2) mittels eines Drehantriebs (4) in einer Vorwärtsrichtung um eine Arbeitsachse (5) ansprechend auf eine Betätigung eines Betriebstasters (7),
Unterbrechen des kontinuierlichen Drehens in der Vorwärtsrichtung durch ein Schutzverfahren, wenn eine Schutzeinrichtung (14) ein Blockieren des Werkzeughalters (2) erfasst,
wobei während des Schutzverfahrens ein oder mehreren Zyklen ausgeführt werden, in welchen der Drehantrieb (4) aufeinanderfolgend entsprechend einer Drehbewegung in eine Rückwärtsrichtung und entsprechend einer Drehbewegung in die Vorwärtsrichtung angesteuert wird,
**dadurch gekennzeichnet, dass**
der Drehantrieb (4) für die Drehbewegung in die Rückwärtsrichtung mit einer ersten Energiemenge und für die Drehbewegung in die Vorwärtsrichtung mit einer zweiten Energiemenge gespeist wird, wobei die erste Energiemenge geringer als die zweite Energiemenge ist.

2. Steuerungsverfahren nach Anspruch 1, **dadurch gekennzeichnet, dass** die erste Energiemenge zwischen 75 % und 95 % der zweiten Energiemenge ist.

3. Steuerungsverfahren nach Anspruch 1 oder 2, **dadurch gekennzeichnet, dass** während des Schutzverfahrens eine Motorsteuerung (15) für die erste Energiemenge einen ersten Strompuls (18) und für die zweite Energiemenge einen zweiten Strompuls (19) in einem Zyklus in den Elektromotor (6) einspeist, wobei eine Dauer (dt1) des ersten Strompulses (18) kürzer als eine Dauer (dt2) des zweiten Strompulses (19) ist.

4. Steuerungsverfahren nach Anspruch 1 oder 2, **dadurch gekennzeichnet, dass** während des Schutzverfahrens eine Motorsteuerung (15) für die erste Energiemenge einen ersten Strompuls (20) und für die zweite Energiemenge einen zweiten Strompuls (21) in einem Zyklus in den Elektromotor (6) einspeist, wobei eine Amplitude des ersten Strompulses (20) geringer als eine Amplitude des zweiten Strompulses (21) ist.

5. Steuerungsverfahren nach einem der vorhergehenden Ansprüche, **dadurch gekennzeichnet, dass** ein Unterschied der ersten Energiemenge zu der zweiten Energiemenge aufeinanderfolgender Zyklen schrittweise erhöht wird.

6. Steuerungsverfahren nach einem der vorhergehenden Ansprüche, **dadurch gekennzeichnet, dass** die Schutzeinrichtung (14) während der Schutzfunktion eine Drehzahl überwacht und ansprechend eines Überschreiten eines Schwellwerts durch die Drehzahl die Schutzfunktion deaktiviert und das kontinuierliche Drehen in die Vorwärtsrichtung fortsetzt.

## Claims

1. Control method for a power tool (1) for rotary tools with the following steps:
continuously rotating a tool holder (2) in a forward direction about a working axis (5) by means of a rotary drive (4) in response to an actuation of an operating button (7),
interrupting the continuous rotation in the forward direction by a protective process when a protective device (14) detects blocking of the tool holder (2),
wherein, during the protective process, one or more cycles are performed in which the rotary drive (4) is actuated successively in accordance with a rotary movement in a reverse direction and in accordance with a rotary movement in the forward direction,
**characterized in that**
the rotary drive (4) is supplied with a first amount of energy for the rotary movement in the reverse direction and with a second amount of energy for the rotary movement in the forward direction, the first amount of energy being smaller than the second amount of energy.

2. Control method according to Claim 1, **characterized in that** the first amount of energy is between 75% and 95% of the second amount of energy.

3. Control method according to Claim 1 or 2, **characterized in that**, during the protective process, a motor controller (15) feeds into the electric motor (6) a first current pulse (18) for the first amount of energy and a second current pulse (19) for the second amount of energy in one cycle, a duration (dt1) of the first current pulse (18) being shorter than a duration (dt2) of the second current pulse (19) .

4. Control method according to Claim 1 or 2, **characterized in that**, during the protective process, a motor controller (15) feeds into the electric motor (6) a first current pulse (20) for the first amount of energy and a second current pulse (21) for the second amount of energy in one cycle, an amplitude of the first current pulse (20) being less an amplitude of the second current pulse (21) .

5. Control method according to one of the preceding claims, **characterized in that** a difference between the first amount of energy and the second amount of energy is increased step by step in successive cycles.

6. Control method according to one of the preceding claims, **characterized in that**, during the protective function, the protective device (14) monitors a rotational speed and, in response to the rotational speed exceeding a threshold value, deactivates the protective function and continues the continuous rotation in the forward direction.

## Revendications

1. Procédé de commande d'une machine-outil (1) pour des outils rotatifs, comprenant les étapes :
mise en rotation continue d'un porte-outil (2) au moyen d'un entraînement rotatif (4) en marche avant autour d'un axe de travail (5) en réponse à un actionnement d'un bouton de service (7),
interruption de la rotation continue en marche avant par une procédure de protection si un dispositif de protection (14) détecte un blocage du porte-outil (2),
dans lequel, pendant la procédure de protection, un ou plusieurs cycles sont effectués au cours desquels l'entraînement rotatif (4) est piloté successivement en selon un mouvement rotatif en marche arrière et selon un mouvement rotatif en marche avant,
**caractérisé en ce que**
l'entraînement rotatif (4) est alimenté par une première quantité d'énergie pour le mouvement rotatif en marche arrière et est alimenté par une deuxième quantité d'énergie pour le mouvement rotatif en marche avant, la première quantité d'énergie étant inférieure à la deuxième quantité d'énergie.

2. Procédé de commande selon la revendication 1, **caractérisé en ce que** la première quantité d'énergie s'élève à entre 75 % et 95 % de la deuxième quantité d'énergie.

3. Procédé de commande selon la revendication 1 ou 2, **caractérisé en ce que** pendant la procédure de protection, une commande moteur (15) alimente dans un cycle une première impulsion de courant (18) pour la première quantité d'énergie et une deuxième impulsion de courant (19) pour la deuxième quantité d'énergie dans le moteur électrique (6), une durée (dt1) de la première impulsion de courant (18) étant inférieure à une durée (dt2) de la deuxième impulsion de courant (19).

4. Procédé de commande selon la revendication 1 ou 2, **caractérisé en ce que** pendant la procédure de protection, une commande moteur (15) alimente dans un cycle une première impulsion de courant (20) pour la première quantité d'énergie et une deuxième impulsion de courant (21) pour la deuxième quantité d'énergie dans le moteur électrique (6), une amplitude de la première impulsion de courant (20) étant inférieure à une amplitude de la deuxième impulsion de courant (21).

5. Procédé de commande selon l'une quelconque des revendications précédentes,
**caractérisé en ce qu'**une différence entre la première quantité d'énergie et la deuxième quantité d'énergie de cycles consécutifs est augmentée progressivement.

6. Procédé de commande selon l'une quelconque des revendications précédentes,
**caractérisé en ce que** pendant la fonction de protection, le dispositif de protection (14) surveille une vitesse de rotation, et en réponse à un dépassement d'une valeur seuil par la vitesse de rotation, désactive la fonction de protection et poursuit la rotation continue en marche avant.
